# EUROPÄISCHE PATENTSCHRIFT

(11) **EP 1 060 959 B1**
(45) Veröffentlichungstag und Bekanntmachung des Hinweises auf die Patenterteilung: **11.10.2006**
(21) Anmeldenummer: 00100691.5
(22) Anmeldetag: 14.01.2000
(51) Int. Cl.: B60R 22/20, F16B 5/06

(54) **Vorrichtung zur Höhenverstellung eines Umlenkbeschlages für einen Sicherheitsgurt in Kraftfahrzeugen**
Guide loop height-adjusting device for a vehicle seat belt
Dispositif de réglage en hauteur d' un ancrage de renvoi pour une ceinture de sécurité de véhicule

(30) Priorität: 19.06.1999 DE 19928162
(43) Veröffentlichungstag der Anmeldung: 20.12.2000
(73) Patentinhaber: KENDRION RSL GmbH & Co.KG, 57368 Lennestadt (DE)
(72) Erfinder: Rau, Dirk, 57413 Finnentrop (DE); Stenzel, Wolfgang, 59889 Eslohe-Cobbenrode (DE)
(74) Vertreter: Köchling, Conrad-Joachim

(56) Entgegenhaltungen:
- EP-A- 0 642 957
- DE-A- 2 610 446
- DE-A- 2 948 353
- DE-A- 19 804 849
- DE-U- 9 400 638
- US-A- 5 280 959
- US-A- 5 580 091

## Beschreibung

Die Erfindung betrifft eine Vorrichtung zur Höhenverstellung eines Umlenkbeschlages für einen Sicherheitsgurt in Kraftfahrzeugen mit einer am Fahrzeug befestigten Führungsschiene, an der ein Beschlagteil verschieblich geführt ist, wobei die Führungsschiene als C-Profil ausgebildet und mit ihrer Basis am Fahrzeug befestigt ist.

Aus der DE 34 06 047 C2 ist eine solche gattungsbildende Vorrichtung bekannt. Die Führungsschiene ist dabei als C-Profil ausgebildet. In der Basis des C-Profils sind Löcher zur Anordnung von Befestigungsschrauben, mittels derer die Führungsschiene an einem entsprechenden Karosserieteil des Fahrzeuges befestigbar ist.

Solche Führungsschienen haben sich in der betrieblichen Praxis bewährt.

Aus der DE 91 13 579 U 1 ist eine weitere solche Vorrichtung bekannt. Die Befestigung dieser Vorrichtung erfolgt an einem Ende der Führungsschiene mittels angeformter Haken, die in eine entsprechende Ausnehmung des Karosserieteils des damit auszurüstenden Fahrzeuges eingreifen. Am anderen Ende der Schiene ist eine Lochung zur Anordnung einer Befestigungsschraube vorgesehen. Auch solche Vorrichtungen haben sich im Stand der Technik bewährt. Bei einer solchen Anordnung ist die Führungsschiene U-förmig profiliert. Die freien Enden der Schenkel der Führungsschiene sind in der Montagesollage dem entsprechenden Karosserieteil zugewandt, an welchem die Führungsschiene befestigt ist. Die Basis der Führungsschiene weist einen relativ großen Längsschlitz auf, in dem der Schlitten für die verschiebliche Bewegung des Beschlagteiles geführt ist. Bei dieser Anordnung muß die Führungsschiene sehr massiv ausgebildet sein, um eine entsprechende Stabilität zu gewährleisten, die sicherstellt, daß bei einer unfallbedingten Belastung der Führungsschiene diese das Beschlagteil nicht freigibt. Diese im wesentlichen U-förmige Profilschiene ist einerseits mit den an ihren Schenkeln ausgebildeten Haken an dem entsprechenden Fahrzeugteil befestigt und andererseits mit einer Abkröpfung der Basis an das Befestigungsteil angelegt und dort mittels einer Schraube fixiert.

Aus der EP 0 249 910 B 1 ist eine weitere gattungsgemäße Vorrichtung bekannt. Dabei ist die Führungsschiene als C-Profil ausgebildet. Die Basis des C-Profils ist an dem entsprechenden Kraftfahrzeugteil befestigbar, wozu am einen Ende der Führungsschiene die Basis eine Lochung zum Durchstecken einer Befestigungsschraube aufweist. Am anderen Ende der Führungsschiene ist eine Doppelanordnung von Haken vorgesehen. Diese Haken sind aus dem Material der Profilschiene ausgestanzt und ausgebogen, wodurch in der Basis der Profilschiene im Bereich der Haken eine relativ große Schwächung resultiert, da die Basis eine Ausnehmung aufweist, die der Größe der ausgeschnittenen und ausgebogenen Haken entspricht.

Bei den bekannten Vorrichtungen mit angeformten Hakenpaaren tritt also jeweils eine Schwächung der Führungsschiene entweder im Bereich der angeformten und ausgebogenen Haken oder im Bereich des in der Basis vorgesehenen Führungsschlitzes auf. Die ebenfalls bekannte Ausbildung, bei der die Führungsschiene mit zwei Schrauben an dem entsprechenden Karosserieteil befestigt wird, ist zwar vorteilhaft, jedoch ist aus Montageerleichterungsgründen vom Abnehmer (Kfz-Hersteller) häufig eine Anordnung von Haken vorgeschrieben.

Für die Hersteller solcher Vorrichtungen besteht zudem das Problem, dass bei ansonsten gleichem Aufbau der Führungsschienen unterschiedliche Führungsschienen gefertigt werden müssen, je nachdem ob die Führungsschiene mit zwei Schrauben an dem entsprechenden Karosserieteil befestigt werden soll, oder aber ob die Führungsschiene mittels einer Hakenausbildung und einer Schraube an dem Karosserieteil befestigt werden soll. Hieraus resultiert eine Anzahl von Fertigungsvarianten, die separat gefertigt, gelagert und vorgehalten werden müssen.

Aus der EP-A-0642957 ist ein höheneinstellbarer Umlenkbeschlag für Sicherheitsgurte bekannt, bei dem mehrere Halterhakenpaare an die Schenkel der als U-Profil ausgebildeten Führungsschiene angeformt sind. Mittels dieser Halterhakenpaare ist eine Befestigung an dem entsprechenden Karosserieteil möglich, indem die Haken in den Fensterausschnitt 6 eingehakt werden. Zusätzlich ist an der Führungsschiene ein Federelement befestigt, welches bei in Montagesolllage befindlicher Schiene in eine entsprechende Aufnahme der Karosserie, insbesondere der B- oder C-Säule rastend eingesetzt ist, oder an der Karosserie, insbesondere an der B- oder C-Säule, ein Federelement befestigt ist, welches in einer Aufnahme der Schiene rastend eingesetzt ist.

Hierdurch ist es möglich, die entsprechende Schiene mit den Haken lagerichtig an der Karosseriesäule oder dergleichen zu befestigen, wobei in der Montagesolllage das Federelement mit einer Aufnahme derart zusammenwirkt, dass einerseits eine ausreichende Fixierung der Schiene in der Solllage erfolgt und andererseits durch die Federwirkung eine gewisse Vorspannung auf die Hakenverbindung erzeugt wird, was dazu führt, dass Klappergeräusche weitestgehend, wenn nicht gar vollständig, unterbunden sind. Da das Federelement im Crashfall keine Last aufnehmen muss, sondern die Last ausschließlich von den Haken der Schiene aufgenommen wird, kann das Federelement klein dimensioniert und auch aus kostengünstigen Werkstoffen gefertigt sein. Bei dieser Ausbildung ist auch vorgesehen, dass am oberen Ende der Schiene zwei Federrasten befestigt sind, die in einer Flucht mit den Halterhaken der Schiene ausgerichtet sind und in Montagesolllage in Lochungen der Karosserie beziehungsweise der Säule einrastbar sind, die in Flucht mit den Fensterausschnitten ausgerichtet sind, in welche die Halterhaken eingreifen.

Ausgehend von diesem Stand der Technik liegt der Erfindung die Aufgabe zugrunde, eine Vorrichtung gattungsgemäßer Art zu schaffen, die es erlaubt, die Fertigungsvielzahl zu vermindern, die äußerst stabil ist und bei der die Führungsschiene eine hohe Festigkeit bei geringer Abmessung und geringem Gewicht aufweist. Zur Lösung dieser Aufgabe wird eine Vorrichtung nach Anspruch 1 vorgeschlagen.

Dadurch, dass die Haken, vorzugsweise Hakenpaare, nicht einstückig mit der Führungsschiene ausgebildet sind, sondern als separate Teile gefertigt und an der Führungsschiene befestigbar sind, wird die Anzahl der Fertigungsvarianten reduziert. Es ist nämlich möglich, Führungsschienen zu fertigen, die an sich zur Befestigung mittels zweier Schrauben bestimmt sind, wozu die Führungsschienen in den Endbereichen der Basis, die gegebenenfalls abgekröpft sein können, entsprechende Lochungen aufweist. Eine solche Schiene stellt das Grundmodell dar. Sofern eine solche Schiene vom Auftraggeber gefordert wird, die mit mindestens einem Hakenpaar am einen Ende Auftraggeber gefordert wird, die mit mindestens einem Hakenpaar am einen Ende ausgestattet ist, so kann der Hersteller in einfacher Weise die Grundversion der Führungsschiene dadurch abwandeln, dass die Haken an der Führungsschiene befestigt werden, so dass eine Führungsschiene bei ansonsten gleicher Bauart gebildet ist, die mindestens an einem Ende eine paarweise Anordnung von Haken aufweist, während das andere Ende beispielsweise mittels einer Schraube an dem entsprechenden Karosserieteil befestigbar ist. Eine solche Ausbildung ist aber nicht nur aus Gründen der Verminderung der Fertigungsvarianten von Führungsschienen vorteilhaft, sondern eine solche Ausbildung ist auch insofern vorteilhaft, als dann, wenn grundsätzlich eine Führungsschiene mit einer Hakenanordnung gefordert ist, eine solche Führungsschiene aus einem U-Profil oder einem C-Profil gefertigt werden kann, an welches dann in dem Bereich der Hakenausbildung die separaten Haken befestigt werden können. Hierdurch tritt keine Schwächung der Führungsschiene durch ausgestanzte und abgebogene Elemente auf. Weil die Führungsschiene keine Schwächung durch die Anordnung der Haken aufweist, kann die Führungsschiene auch kleiner dimensioniert und mit geringerer Wandstärke ausgebildet sein als herkömmlich, ohne dass die Festigkeit der Führungsschiene darunter leidet, so dass diese unfallbedingten Belastungen in gleicher Weise standhalten kann, wie im Stand der Technik. Üblicherweise sind an den Führungsschienen jeweils zwei solcher Haken paarweise an den beiden Flanken der Führungsschiene ausgebildet. Diese grundsätzliche Anordnung wird beim Gegenstand der Erfindung beibehalten, wobei lediglich die Haken nicht einstückig mit der Führungsschiene ausgebildet sind, sondern separate mit der Führungsschiene verbindbare Teile sind. Solche Haken können in einfacher Weise aus flachen Blechausschnitten in Form von Stanzteilen gebildet sein, wobei diese Stanzteile einen Bereich aufweisen, der an der Führungsschiene in geeigneter Weise befestigbar ist und den eigentlichen Hakenbereich aufweisen, der von der Führungsschiene unterseitig abragt und in entsprechende Eingriffsschlitze der Karosserie des damit auszustattenen Fahrzeuges eingreifen kann.

Um die Stabilität noch zu verbessern und die Befestigungsmöglichkeiten der Haken an der Führungsschiene noch besser gestalten zu können, ist vorgesehen , dass die Haken mit Teilbereichen über die zueinander gerichteteten Endbereiche der Schenkel der als C-Profil ausgebildeten Führungsschiene greifen und in diesem Bereich allein oder zusätzlich an der Führungsschiene befestigt sind.

Durch diese Ausbildung wird ein einteiliges Element zur Verfügung gestellt, welches die beiden Haken und den Verbindungssteg aufweist. Dieses Element kann nach Art eines Adapters auf die Schiene aufgesetzt werden, so dass beispielsweise bei einer C-profilartigen Schiene der Verbindungssteg den Schlitz des C-Profils übergreift und die Haken mit den Schenkeln der U-Form des Adapters die Schenkel der Führungsschiene außenseitig übergreifen und an diesen fixiert sind, wobei die Hakenmäuler über die Basis der Profilschiene nach unten vorragen. Durch diese Anordnung wird eine zusätzliche Versteifung der Führungsschiene erreicht, so daß die Gefahr gemindert ist, daß der Längsschlitz des C-Profils sich bei einer unfallbedingten Belastung der Vorrichtung aufweitet oder aufbiegt. In gleicher Weise wird auch bei einer U-förmig profilerten Führungsschiene dieser Vorteil erreicht, wobei die U-profilartige Schiene beispielsweise mit den Schenkeln voran an das entsprechende Kfz-Teil anschließbar ist und der U-förmig gestaltete Adapter über die Basis und die Schenkel der U-profilartigen Schiene greift und mit den Haken gleichgerichtet zu den Enden der Schenkel der U-profilartigen Schiene über diese vorragen. Bei einer solchen Schiene ist ein Längsschlitz im Mittelbereich für den verstellbaren Beschlag erforderlich, der sich ebenfalls bei unfallbedingten Belastungen aufbiegen könnte. Durch die Anordnung des U-förmigen Adapters mit den Haken wird eine Stabilisierung erreicht, die das Aufbiegen der Schiene in dem Bereich des Längsschlitzes der Basis verhindert.

Durch die angegebene Anordnung wird insbesondere auch ermöglicht, daß die Führungsschiene aus Material geringerer Wandstärke gefertigt werden kann und auch die Profilhöhe der Führungsschiene gegenüber dem Stand der Technik vermindert werden kann.

Es liegt selbstverständlich auch im Rahmen der Erfindung, dass an der Führungsschiene nicht nur ein Hakenpaar, sondern mehrere Hakenpaare in adäquater Weise nach dem Erfindungsvorschlag angebracht und befestigt werden können.

Bevorzugt kann vorgesehen sein, dass am hakenlosen Endbereich der Führungsschiene in deren Basis eine Lochung zum Durchstecken einer Befestigungsschraube ausgebildet ist.

Aus den oben schon dargelegten Gründen ist zudem vorzugsweise vorgesehen, dass an beiden Endbereichen der Führungsschiene in deren Basis Lochungen zum Durchstecken von Befestigungsschrauben ausgebildet sind.

Vorzugsweise ist dabei vorgesehen, dass die Haken an der Führungsschiene schweißbefestigt sind.

Alternativ oder zusätzlich kann auch vorgesehen sein, dass die Haken mit der Führungsschiene mechanisch verbunden sind.

Eine mechanische Verbindung kann beispielsweise durch einen Fügevorgang oder einen Läppvorgang erfolgen. Insbesondere das sogenannte Druckfügen ist eine durchaus mögliche und vorteilhafte Art der Verbindung.

Ein Ausführungsbeispiel der Erfindung ist in der Zeichnung dargestellt und im Folgenden näher beschrieben. Es zeigt:
- Figur 1: eine Führungsschiene in Schrägansicht;
- Figur 2: desgleichen in Draufsicht.

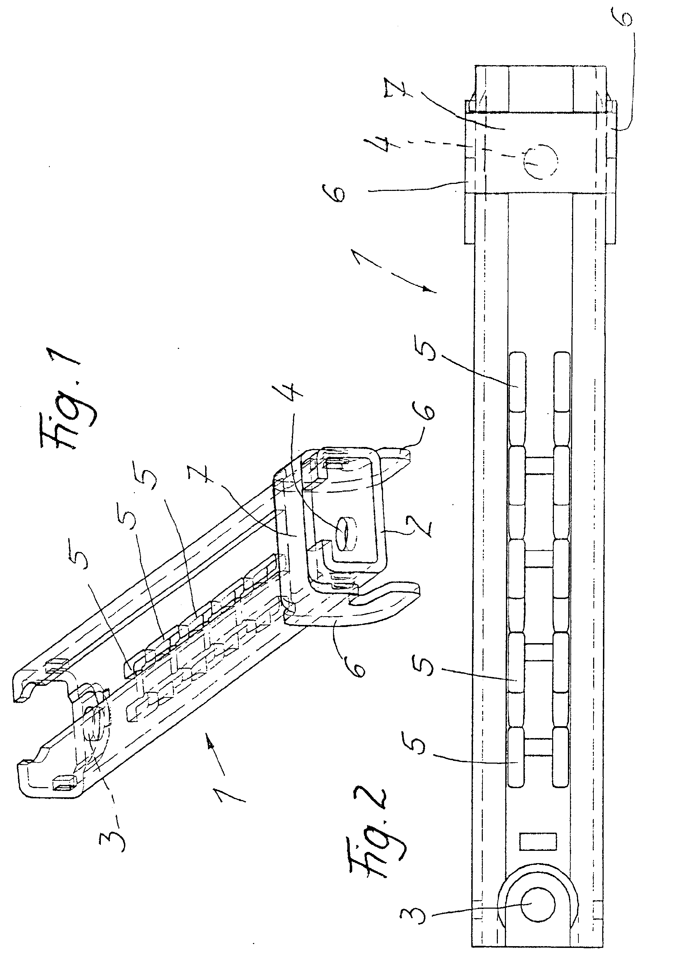

In der Zeichnung ist ein wesentlicher Bestandteil einer Vorrichtung zur Höhenverstellung eines Umlenkbeschlages für einen Sicherheitsgurt in Kraftfahrzeugen gezeigt. Dieser wesentliche Bestandteil ist eine Führungsschiene 1, an der in einem Schlitz ein Beschlagteil verschieblich geführt werden kann. Die Führungsschiene 1 ist im Ausführungsbeispiel als C-Profil ausgebildet. In der Montagesollage ist diese Führungsschiene 1 mit ihrer Basis 2 an einem entsprechenden Fahrzeugteil befestigbar. Dazu weist die Basis 2 Lochungen 3,4 auf, so daß Befestigungsschrauben hindurchgesteckt werden können, um die Führungsschiene 1 an dem entsprechenden Karosserieteil oder dergleichen zu befestigen.

In der Basis der Schiene 2 sind zudem Rastausnehmungen 5 in Mehrfachanordnung über den Längsverlauf der Schiene verteilt angeordnet, die zur verrastenden Halterung eines verschieblichen Schlittens dienen, der das eigentliche Beschlagteil zur Umlenkung des Sicherheitsgurtes oder dergleichen haltert.

Am einen Ende der Führungsschiene 1 sind zwei Haken 6 befestigt, die ebenfalls zur Befestigung der Führungsschiene 1 an einem entsprechenden Karosserieteil dienen, wozu das Karosserieteil entsprechende Schlitze aufweist, in die die Haken eingesteckt werden können.

Für den Anwendungsbereich, bei dem die Führungsschiene 1 mittels der Haken 6 und mittels einer in die Lochung 3 angebrachten Schraube befestigt werden kann, dient die in der Zeichnung dargestellte Ausführungsform. Es ist aber auch möglich, die Führungsschiene 1 nur mittels Schrauben an dem entsprechenden Karosserieteil zu befestigen, wobei dann die Haken 6 nicht an der Schiene 1 fixiert sind, sondern lediglich die Befestigungsschrauben durch die Lochungen 3 und 4 gesteckt sind.

Die Haken 6 sind an symmetrischer Stelle niveaugleich und mit gleich orientiertem Hakenmaul an der Führungsschiene 1 fixiert. Dazu sind die Haken 6 an den Außenseiten der Schenkel der Führungsschiene 1 befestigt, wobei die Haken 6 an einen flachen Befestigungslappen angeformt sind, der am jeweiligen Schenkel der Führungsschiene 1 befestigt ist. Zudem weisen die Haken 6 einen Bereich auf, der über die zueinander gerichteten Endbereiche der Schenkel der als C-Profil ausgebildeten Führungsschiene 1 greifen.

Desweiteren sind die Haken 6 durch einen einstückig mit diesem ausgebildeten Verbindungssteg 7 miteinander verbunden, der den Längsschlitz der Führungsschiene 1 übergreift und an den zueinander gerichteten Endbereichen der Schenkel der Führungsschiene anliegt. Die Haken 6 samt Steg 7 können in geeigneter Weise an der Führungsschiene 1 befestigt werden. Vorzugsweise ist dazu eine Schweißbefestigung vorgesehen. Die Führungsschiene 1 und die Haken 6 mit dem Steg 7 bestehen vorzugsweise aus Stahl.

Das die Haken 6 und den Steg 7 aufweisende Teil ist ein Blechformteil, welches aus einem ebenen Stanzteil zu einer U-Form geformt ist, wobei die Schenkel der U-Form die Anlageflächen an die Schenkel der Profilschiene 1 aufweisen und die davon in Montagelage über die Unterseite der Schiene 1 vorragenden hakenartigen Ausbildung. Um eine entsprechende Stabilität und Steifheit zu erreichen, kann der an den Schenkeln der Profilschiene 1 anliegende Bereich des Teiles (6,7) verbreitert sein. Der Verbindungssteg 7 kann dem gegenüber schmaler ausgebildet sein, um den zur Verschiebung des Beschlagteils benötigten Raum nicht unnötig einzuschränken.

## Patentansprüche

1. Vorrichtung zur Höhenverstellung eines Umlenkbeschlages für einen Sicherheitsgurt in Kraftfahrzeugen mit einer am Fahrzeug befestigbaren Führungsschiene (1), an der ein Beschlagteil verschieblich führbar ist, wobei die Führungsschiene (1) als C-Profil ausgebildet und mit ihrer Basis (2) am Fahrzeug befestigbar ist, **dadurch gekennzeichnet, dass** mindestens an einem Ende der als C-Profil ausgebildeten Führungsschiene (1) mindestens zwei als separate Teile gefertigte Haken (6) an der Führungsschiene (1) befestigt sind, die in Verankerungsschlitze des Fahrzeugs einsetzbar sind, an dem die Führungsschiene (1) befestigbar ist, die beiden Haken niveaugleich und mit gleich orientiertem Hakenmaul angeordnet sind, die beiden Haken (6) mit Teilbereichen über die zueinander gerichteten Endbereiche der Schenkel der als C-Profil ausgebildeten Führungsschiene (1) greifen und in diesem Bereich allein oder zusätzlich an der Führungsschiene (1) befestigt sind, und die beiden Haken (6) durch einen angeformten Verbindungssteg (7) miteinander verbunden sind, der den Schlitz der Führungsschiene (1) übergreift.

2. Vorrichtung nach Anspruch 1, **dadurch gekennzeichnet, dass** am hakenlosen Endbereich der Führungsschiene (1) in deren Basis eine Lochung (3) zum Durchstecken einer Befestigungsschraube ausgebildet ist.

3. Vorrichtung nach Anspruch 1 oder 2, **dadurch gekennzeichnet, dass** an beiden Endbereichen der Führungsschiene (1) in deren Basis (2) Lochungen (3,4) zum Durchstecken von Befestigungsschrauben ausgebildet sind.

4. vorrichtung nach einem der Ansprüche 1 bis 3, **dadurch gekennzeichnet, dass** die Haken (6) an den Außenseiten der Schenkel der Führungsschiene (1) befestigt sind, wobei die Haken (6) an einen flachen Befestigungs-lappen angeformt sind, der am jeweiligen Schenkel der Führungsschiene (1) befestigt ist.

5. Vorrichtung nach einem der Ansprüche 1 bis 4, **dadurch gekennzeichnet, dass** die Haken (6) an der Führungsschiene (1) schweißbefestigt sind.

6. Vorrichtung nach einem der Ansprüche 1 bis 4, **dadurch gekennzeichnet, dass** die Haken (6) mit der Führungsschiene (1) mechanisch verbunden sind.

## Claims

1. A device or the height adjustment of a loop-around fitting for a safety belt in motor vehicles, having a guide rail (1) that can be fastened to the vehicle (1), on which a fitting part can be displaceably guided, the guide rail (1) being constructed as a C section and being fixable by its base (2) to the vehicle,
**characterised in that** at least on one end of the guide rail (1) constructed as a C section at least two hooks (6) produced as separate parts are fixed to the guide rail (1), which can be inserted into anchoring slits of the vehicle to which the guide rail (1) can be fixed, the two hooks are disposed at the same level and with an identically orientated hook mouth, the two hooks (6) engage by some parts over the end regions, directed towards each other, of the legs of the guide rail (1) constructed as a C section and in this region are by themselves or additionally fixed to the guide rail (1), and the two hooks (6) are connected to each other by an integrally formed connecting web (7), which overlaps the slit of the guide rail (1).

2. A device according to Claim 1,
**characterised in that** a punched hole (3) for the passage of a fastening screw is constructed at the hookless end region of the guide rail (1) in its base.

3. A device according to Claim 1 or 2,
**characterised in that** punched holes (3, 4) for the passage of fastening screws are constructed at both end regions of the guide rail (1) in its base (2).

4. A device according to one of Claims 1 to 3,
**characterised in that** the hooks (6) are fixed to the outer sides of the legs of the guide rail (1), with the hooks (6) being formed on a flat fastening lug which is fixed to the respective leg of the guide rail (1).

5. A device according to one of Claims 1 to 4,
**characterised in that** the hooks (6) are welded to the guide rail (1).

6. A device according to one of Claims 1 to 4,
**characterised in that** the hooks (6) are mechanically connected to the guide rail (1).

## Revendications

1. Dispositif de réglage en hauteur d'une ferrure de renvoi pour une ceinture de sécurité de véhicules comprenant un rail de guidage (1) pouvant être fixé au véhicule, rail sur lequel peut être guidée de façon mobile une partie de ferrure, le rail de guidage (1) étant conçu comme un profilé en C et pouvant être fixé avec sa base (2) au véhicule, **caractérisé en ce qu'**au moins deux crochets (6) fabriqués comme parties séparées sont fixés au rail de guidage (1) au moins à une extrémité du rail de guidage (1) conçu comme un profilé en C, lesquels crochets peuvent être insérés dans des fentes d'ancrage du véhicule, auquel peut être fixé le rail de guidage (1), les deux crochets sont disposés au même niveau et avec une mâchoire de crochet orientée de la même façon, les deux crochets (6) se mettent en prise avec des zones partielles par l'intermédiaire de zones d'extrémité des branches du rail de guidage (1) conçu comme un profilé en C orientées les unes par rapport aux autres et sont fixés dans cette zone seuls ou en plus au rail de guidage (1), et les deux crochets (6) sont reliés l'un à l'autre par un étai de raccordement (7) intégré, qui chevauche la fente du rail de guidage (1).

2. Dispositif selon la revendication 1,
**caractérisé en ce qu'**une perforation (3) destinée à laisser traverser une vis de fixation est conçue sur la zone d'extrémité exempte de crochet du rail de guidage (1) dans la base de celui-ci.

3. Dispositif selon la revendication 1 ou 2, **caractérisé en ce que** des perforations (3, 4) destinées à laisser traverser des vis de fixation sont conçues sur les deux zones d'extrémité du rail de guidage (1) dans la base (2) de celui-ci.

4. Dispositif selon l'une quelconque des revendications 1 à 3, **caractérisé en ce que** les crochets (6) sont fixés sur les côtés extérieurs des branches du rail de guidage (1), les crochets (6) étant intégrés sur une patte de fixation plate, qui est fixée à la branche respective du rail de guidage (1).

5. Dispositif selon l'une quelconque des revendications 1 à 4, **caractérisé en ce que** les crochets (6) sont fixés par soudage au rail de guidage (1).

6. Dispositif selon l'une quelconque des revendications 1 à 4, **caractérisé en ce que** les crochets (6) sont reliés mécaniquement au rail de guidage (1).
